**Europäisches Patentamt**

**European Patent Office**

**Office européen des brevets**

(19)

(11) Publication number: **0 148 733**
**A1**

(12)

# EUROPEAN PATENT APPLICATION

(21) Application number: **84830346.7**

(22) Date of filing: **19.12.84**

(51) Int. Cl.⁴: **H 04 N 5/45**

---

(30) Priority: **28.12.83 IT 2441783**

(43) Date of publication of application: **17.07.85**
**Bulletin 85/29**

(84) Designated Contracting States: **AT BE CH DE FR GB LI LU NL SE**

(71) Applicant: **Venier, Pierpaolo, Via S. Agnese 14, Milano (IT)**
Applicant: **Tornelli, Enzo, Via Vivaio 24, Milano (IT)**

(72) Inventor: **Venier, Pierpaolo, Via S. Agnese 14, Milano (IT)**
Inventor: **Tornelli, Enzo, Via Vivaio 24, Milano (IT)**

(74) Representative: **Caregaro, Silvio et al, c/o Società Italiana Brevetti S.p.A. Via Carducci 8, I-20123 Milano (IT)**

---

(54) **Method to broadcasting simultaneously two or more televisionprograms.**

(57) During broadcasting of a normal television program at least one «area» is temporarily set aside where a commercial program or insert is in particular transmitted.

"METHOD TO BROADCASTING SIMULTANEOUSLY TWO OR MORE
TELEVISION PROGRAMS"

This invention relates to a method of broadcasting
simultaneously and without interruption a normal
program, or main program, together with the temporary
transmission of one or more commercial programs
that are assigned a limited room on the television
screen, without causing the interruption of the
main program.

It is known how the television broadcasting of
commercial inserts presently requires interruption
of the normal television programs causing remarkable
discomfort and annoyance to the consumer. Moreover,
this makes it necessary to introduce separating
sequences between the program and the commercial
insert for the necessary synchronization and in
addition to allow the consumer to differentiate
between the main program and the commercial intermission.

For economic reasons, said interruptions tend
to become more and more frequent, causing a strong
disappointment to the user. On the other hand, in
the short term, it is not conceivable to reduce
the extent of said commercial inserts that are often
the only source of financial support for the television
networks.

Therefore, one of the objects of this invention
is to provide a method adapted to allow broadcasting
of commercial inserts in a continuous and discontinuous
way, without involving interruptions of the normal television programs.

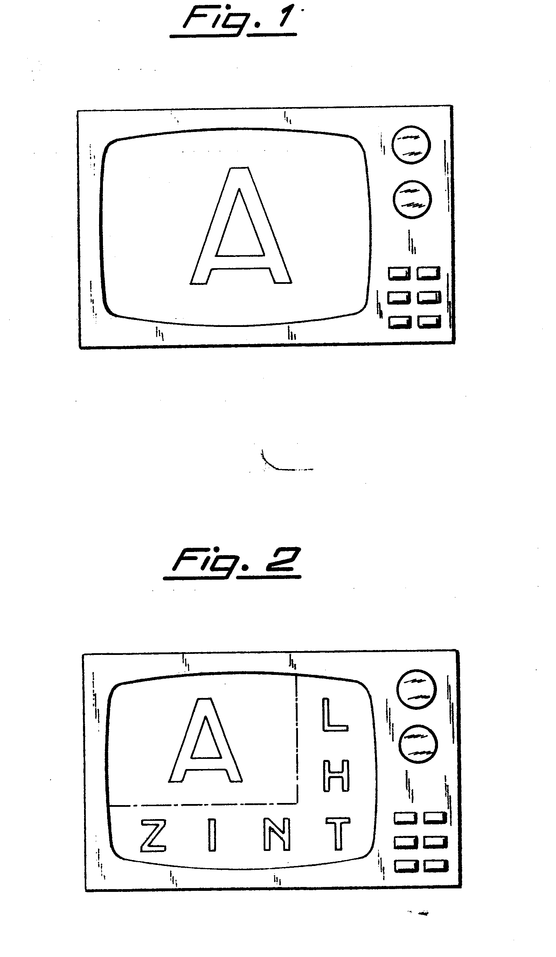

The features of the method according to this invention will now be described with reference to Figures 1 and 2 where respectively:

FIGURE 1 shows a television set while broadcasting a normal television show, and

FIGURE 2 shows the same television set that, while showing said main television program previously mentioned, makes it also possible to watch a commercial insert.

In Figure 1 the television set is showing a normal television program, indicated schematically at A, which occupies completely the available television screen. The television set shown on Figure 2 is still broadcasting the same television program A, but having a reduced image area that takes only part of the television screen, while the remaining part is taken by the capital letters indicating diagrammatically the possibility to transmit in said area a commercial insert, comprising a fixed image or a motion sequence (as for instance photographs or movie sequences or other commercial pictures, concerning in particular the product to be advertised).

Preferably, a major area of the screen remains dedicated to the main program, while the commercial insert is confined to an "area" located in a peripheral position on the screen. In the schematic representation shown in Figure 2, said "area" is L-shaped, but it will be understood that other forms and locations are possible for said "area" of the screen adapted for receiving the commercial insert. The "area" may in fact have a generally rectangular or square shape, located at the corners of the television screen, or else circular or elliptical, or the like, but always located preferably at a peripheral position. Said commercial insert will normally be soundless. The reduction of the image area related to the main program and the aperture of the "area" dedicated to the commercial insert may be obtained using one of the known procedures such as for instance that of the squeeze-zoom or equivalent. It will also be apparent that the image of the main program, so reduced, can be integrated in the other image that takes the "area" dedicated to the commercial insert, in order to form a composite but coherent image. For example, in the case when the image of the main program is received on a television screen that, in this case, would actually comprise the image of the commercial insert and in particular of the advertised product (in this instance actually a television set).

The corresponding signals can be sent without broadening of the broadcasting band, particularly in the case where said signals have a high persistance and can be easily perceived by the consumer, for instance during a hold of the action taking place in the main program.

The commercial inserts that are broadcasted on the television screen do not cause interruption of the main program, and that allows the consumer to perceive said information in a non disagreable form as it is presently the case. Since the supplemental commercial programs do not interfere with the normal reception of the main program, they can of course be transmitted without any scheduling limitation.

In the same way, the above described image is very well adapted for the transmission of the station breaks where the speaker himself introduces the commercial talk, for instance closing the presentation of a certain program with the invitation to watch it more pleasantly while using the advertised products appearing in the "area" dedicated, that opens up simultaneously on the screen.

While the invention has been described with reference to particular embodiments thereof, it is not to be deemed as limited to the latter, because all those obvious variations and/or modifications that will become apparent to the experts in the art are included within its scope.

C L A I M S

1. A method for performing simultaneous broadcasting of two or more television programs, characterized in that one of said program, the main program, is broadcasted on a major portion of the television screen, and one or more supplemental programs are visualized on limited areas of the television screen.

2. A method according to claim 1, characterized in that the supplemental programs are broadcasted intermittently by the provision of related "areas", the whole television screen being assigned to the main program at times where the supplemental programs are absent.

3. A method according to claim 1, characterized in that said supplemental programs are commercial inserts.

4. A method according to claim 1, characterized in that said "areas" have a rectangular shape and are located in peripheral positions on the television screen.

0148733

Fig. 1

Fig. 2

**European Patent Office**

**EUROPEAN SEARCH REPORT**

Application number

EP 84 83 0346

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 536 835 (LICENTIA) <br> * Whole document * | 1,3 | H 04 N 5/45 |
| X | PATENTS ABSTRACTS OF JAPAN, vol. 7, no. 62 (E-164)[1207], 15th March 1985; & JP - A - 57 208 772 (SONY K.K.) 21-12-1982 | 1,4 | |
| X | US-A-4 267 560 (ISHIKAWA) <br> * Column 1, lines 17-33 * | 1 | |
| A | US-A-4 344 090 (BELISOMI) | 1,2 | |
| A | GB-A-1 370 535 (BBC) | 1 | |
| | ----- | | **TECHNICAL FIELDS SEARCHED (Int. Cl.4)** <br><br> H 04 N 5/45 |

The present search report has been drawn up for all claims

| Place of search <br> THE HAGUE | Date of completion of the search <br> 01-04-1985 | Examiner <br> SIX G.E.E. |
|---|---|---|